# EUROPEAN PATENT SPECIFICATION

(11) **EP 2 332 239 B1**
(45) Date of publication and mention of the grant of the patent: **03.04.2019**
(21) Application number: 09783603.5
(22) Date of filing: 30.09.2009
(51) Int. Cl.: H02K 5/22

(54) **ELECTRIC MOTOR WITH IMPROVED CONNECTOR**
ELEKTROMOTOR MIT VERBESSERTEM VERBINDER
MOTEUR ÉLECTRIQUE À CONNECTEUR AMÉLIORÉ

(30) Priority: 10.10.2008 IT PN20080074
(43) Date of publication of application: 15.06.2011
(73) Proprietor: Nidec Sole Motor Corporation S.r.l., 33170 Pordenone (IT)
(72) Inventor: BONACINA, Sergio, I-22043 Galbiate (Lecco) (IT)
(74) Representative: Gonella, Mario
(86) International application number: PCT/EP2009/062695
(87) International publication number: WO 2010/040672

(56) References cited:
- EP-A- 0 837 542
- FR-A- 2 793 300
- GB-A- 331 792

## Description

The present invention refers to an improved kind of electric motor, preferably of the type generally used as a drive means within household appliances, such as clothes washing machines, dishwashing machines and the like, and thus provided with corresponding operating capabilities.

Electric motors of the above-cited kind are generally known to be mass-produced in very large quantities on an industrial scale and therefore - considering also the quite extreme competitiveness requirements, which such products are generally required to comply with - they must ensure corresponding properties and capabilities of great flexibility in both their construction and their practical use, i.e. installation and assembly, in the various particular appliance types and models, in which they are due to operate.

Currently, however, such motors are manufactured using throughout traditional techniques and materials, which involve production costs to be sustained that are not liable to be curbed or reduced to any significant extent any further, if the same manufacturing techniques and construction materials are kept being used in a substantially unaltered manner.

GB 331792 discloses a flat disc-shaped electric motor, wherein the upper element is adapted to carry a gramophone record. The two motor elements are frictionally coupled for joint running by a sliding piece which is carried by the lower element and is spring-pressed against the flange of the upper element. Insertion of a contact member for connecting the motor to the supply for electric driving presses back the sliding piece and leaves the two elements uncoupled. A sliding piece on the lower motor element is mounted between the electrical contact pins and is normally pressed out by a spring so that its head, which is covered with rubber or the like, engages the inner face of the flange of the upper motor element. When the connector is pressed on to the pins, it bears on an arm attached to the sliding piece which is thus moved inwards to uncouple the motor elements.

EP 0837542 discloses a connector assembly, particularly for the windings of a stator of an electric motor which comprises a connector element constituted by a section for anchoring to the electric motor and by a section for the guided and predefined connection of the windings to a complementary part connected to the power supply; the sections are mutually monolithic and the latter section has one or more cavities adapted to accommodate terminals for electrical connection between the stator and the power supply; each one of the terminals (17) of the connector assembly is constituted by a laminar body, made of conducting material, which comprises two sections which lie on mutually perpendicular planes; a first one of the sections is shaped so as to form a flap, the free end of which is in turn shaped so as to form two substantially rigid mutually opposite wings which form a slot in which two elastic tabs converge towards the bottom; the tabs are connected in an L-shaped configuration to a corresponding wing, and an electric conductor with insulating sheath can be inserted up to the free end between the elastic tabs, part of the edges of which is sharp. A second one of the sections is shaped so as to form the male element of an electrical connection to a corresponding female terminal.

FR 2793300 discloses a cover plate designed for a motor vehicle alternator powered by the engine via a belt, capable of being adapted for different vehicle engines, comprising means for fixing an alternator, mechanical and electrical linking means between the alternator and the engine and means for tensioning the belt, and it includes at least a lower lug to be fixed to the vehicle engine and at least two adjustable upper lugs for tensioning the belt.

Reference is hereby made in particular to the construction of electric motors, in which the stator winding is retained and supported by an outer structure, which is generally comprised of two frame halves, i.e. end-shields, which are provided individually, are usually configured in a cup-like or bowl-like shape, and are arranged relative to each other so as to contain and accommodate said stator winding therewithin; upon said stator winding having been fitted and assembled therebetween, said two frame halves are firmly coupled to each other by means of proper stay-bolts, or similar connecting and fastening means, so as to enable the construction of the motor to be completed.

Such two frame halves are then applied - with the aid of simple means generally known as such in the art - to appropriate support means, so that the motor can be installed in the intended site of use in a firm and stable manner.

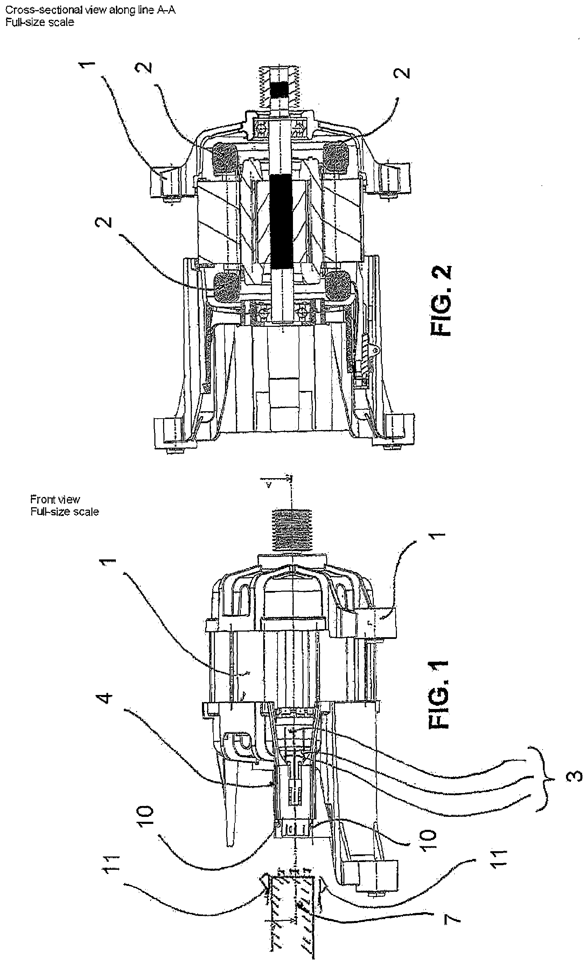

As far as the required electrical connections are concerned, the universally employed technique is based on having the electric lead wires of the stator winding connected to respective terminal lead wires that extend out of the body of the same winding and are connected to an element of an electric connector of a conventional kind, as this is symbolically shown in Figure 1.

The second element of such electric connector is then connected to respective lead wires ensuring the power supply to the stator windings of the motor.

Anyhow, this technique, although quite easily implemented and reliable in its results, has a major drawback that is less and less acceptable in a highly competitive industrial environment, i.e. its rather high extent of intricateness deriving from the need for the lead wires of the stator winding to be in the first place connected to the terminal lead wires extending out of the stator, and the need for a second connection means to be then mounted and used to connect said terminal lead wires to the external power-supply lead wires.

In practice, the need for said operations to be carried out translates into an interruption in a fully automated manufacturing process and, as a result, an added cost to be sustained due not only to a certain loss in efficiency, but also the need for further materials, parts and manufacturing operations to be additionally used.

It can be most readily appreciated that, if such higher cost is multiplied by a right enormous amount of times, as this occurs under actual production conditions, it eventually turns out as being fully unacceptable.

It is therefore desirable, and is a main object of the present invention, actually, to provide an electric motor provided with a stator winding, at least an outer or enclosing frame, as well as means that are particularly simple and cost-effective to electrically connect said lead wires of the stator winding to the power-supply circuit provided outside the same motor.

According to the present invention, this aim is reached in an electric motor incorporating the characteristics as set forth and recited in the appended claims.

Features and advantages of the present invention will anyway be more readily understood from the description that is given below by way of non-limiting example with reference to the accompanying drawings, in which:
- Figure 1 is a side planar view of an electric motor as viewed from a plane lying parallel to the motor axis on the side provided with a specific device according to the present invention, in a first operating state thereof;
- Figure 2 is a cross-sectional view of the same motor along the section plane A-A of Figure 1;
- Figure 3 is a front view from the motor-shaft side of the electric motor shown in Figure 1;
- Figure 4 is a view of the motor shown in Figure 1, as viewed with the inventive device in a different operating state thereof;
- Figure 5 is a perspective view of the motor shown in Figure 4, with the inventive device in the same operating state;
- Figure 6 is a diagonal perspective, enlarged view of a portion of the motor shown in Figure 4, with the inventive device in the same operating state;
- Figure 7 is a perspective view of the motor shown in Figure 1, with the inventive device in the same operating state;
- Figure 8 is a perspective, enlarged view of a portion of the motor shown in Figure 7, with the inventive device in the operating state shown in Figure 1;
- Figure 9 is a substantially similar view as the one shown in Figure 8, in which an invention-specific device has however been removed;
- Figure 10 is a perspective of a portion of the motor shown in Figure 8, in which the inventive device is shown in a partially cross-sectional view;
- Figure 11 is a planar view of the electric motor according to the present invention, as viewed from a plane extending orthogonally to the motor axis.

With reference to Figures 1 to 5, the electric motor according to the present invention comprises an outer frame 1, a stator winding 2, electric lead wires 3 that form the terminal portions of said stator winding 2, and an electric connector that is adapted to connect said terminal lead wires to an external power-supply circuit.

As this shall be described in greater detail further on, the outer frame is provided with an appendix 4, which is accessible from outside, and which is so shaped as to have an inner portion thereof formed in the way of a guide 5 extending rectilinearly.

Said electric connector is in turn formed so as to include a first interface 6 and a second interface 7, wherein the latter is capable of being selectively coupled with said first interface, which is in turn connected to said lead wires 3, whereas said second interface 7 is generally connected electrically to the power-supply circuit provided outside the motor, and is preferably connected to a terminal board provided in a fixed position relative to the structure of the motor.

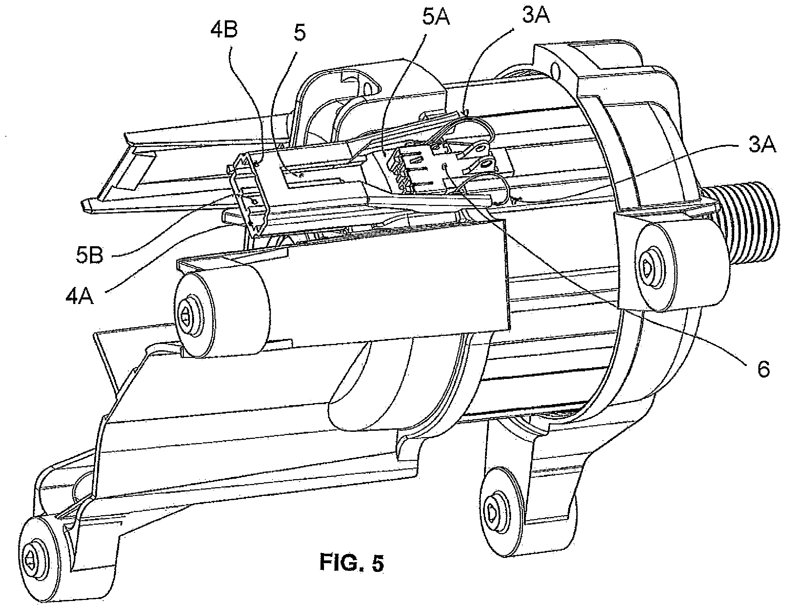

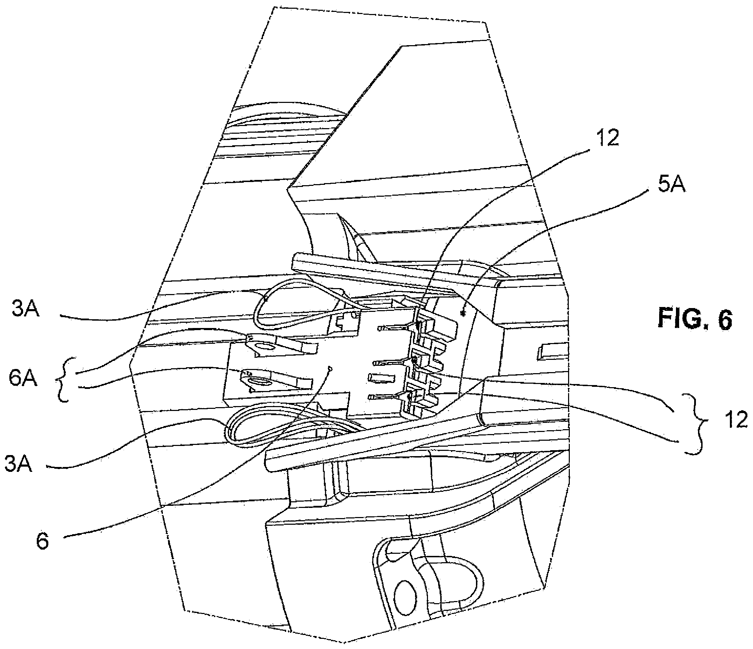

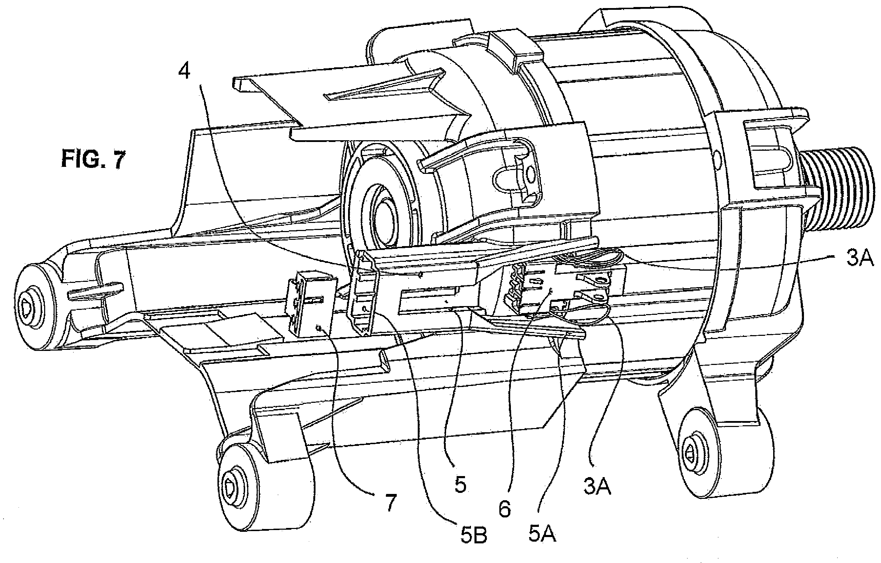

Advantageously, and for a reason that will be most readily understood, said guide 5 is oriented so that one 5A of the end portions thereof (Figures 5, 6) comes to lie relatively closer to the exit point of said lead wires 3, whereas the other end portion 5B thereof (Figure 7) is located relatively farther therefrom.

Said first interface 6 and said guide 5 are shaped, sized and arranged relative to each other so that said first interface 6 is able to slide in a continuous manner in and along said guide 5, so as to be able to move into two mutually opposite end-of-stroke positions that correspond to said two end portions 5A and 5B of said guide 5.

When lying at said first end portion 5A, said first interface 6 will have moved in a position in which it lies very close to said lead wires 3, whereas it will have moved into the farthest-away position from said lead wires 3 when lying at the second end portion 5B of said guide.

The description given above is fully adequate to right now enable a first mode of operation of the present invention to be explained: it can in fact be appreciated that said first interface 6 must in the first place be caused to slide into the position corresponding to the end portion 5A of the guide 5, as this is shown in Figures 5 and 6; then, the terminals of said lead wires 3 of the stator winding are connected to said first interface 6.

Anyway, the need arises at this point to draw the attention to a feature that is of basic importance to the purposes of the present invention, i.e. the portions of the lead wires 3 extending from the point of exit from the stator winding 2 to said first interface 6, when the latter is in its position 5A, i.e. when it lies the closest to said lead wires 3 of the stator winding 2, must have respective lengths that are adequately greater than the plain geometrical distance separating said mutually opposite end portions 5A and 5B of the guide 5 from each other.

Such need arises from the fact that said lead wires 3 must be able to remain reliably connected to said first interface 6 in any position whatsoever, which said interface may also be able to move into when sliding within the guide 5 and, therefore, also when it moves into the extreme position 5B thereof, which is the furthermost one from the stator winding 2.

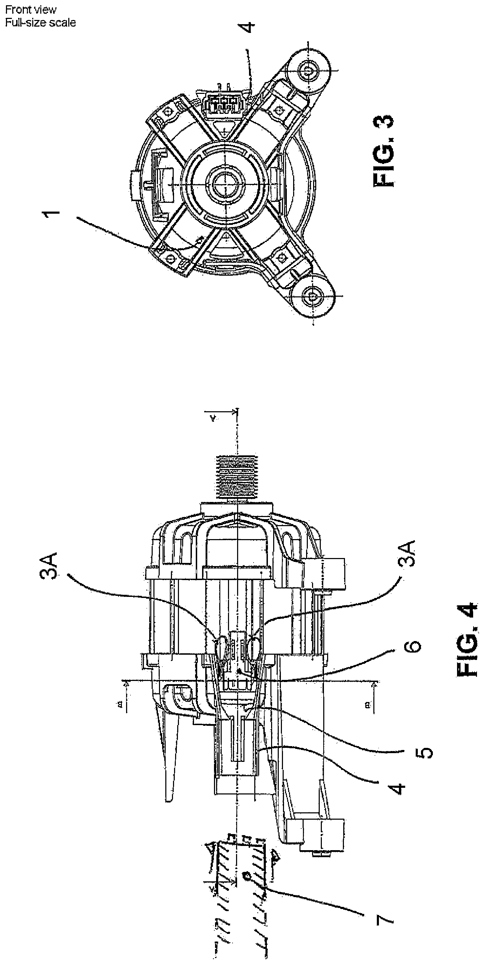

As a result, said connection lead wires 3 must be given an arc-shaped pattern 3A, so as to enable said arc-shaped portion thereof to straighten out when the above-mentioned interface 6 slides within said guide 5 from the first position 5A into said second position 5B thereof, thereby ensuring the necessary length to yield to and sustain the sliding motion of said interface 6 from said closest position thereof at the end portion 5A to said furthermost position thereof at the end portion 5B of the guide 5 (see Figures 4 through to 7).

Finally, for said connector to be eventually attached to close the circuit, said first interface 6 is first of all brought close to said second interface 7 by causing it to slide in said guide 5, as this is best shown in Figure 7.

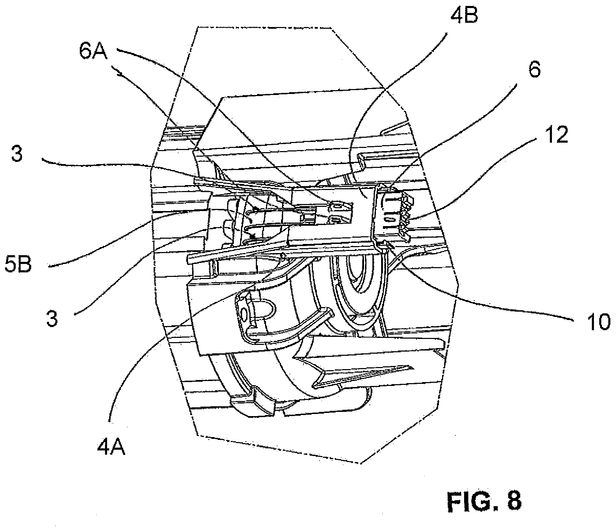

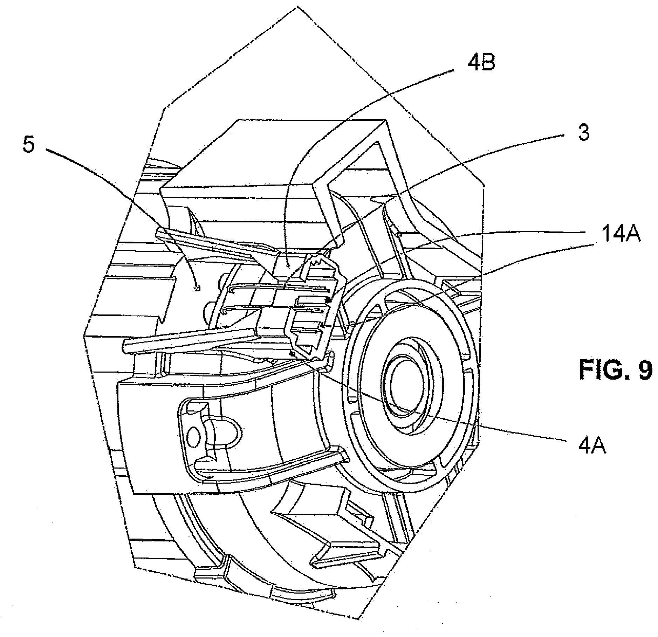

Fully apparent is at this point the way in which, as said first interface 6 is caused in this way to slide within said guide, the same first interface moves away from the stator winding and, as a result, it must necessarily take advantage of and use said wire portions 3A folded into an arc-shaped pattern to accommodate for the greater length thereof, which, during said sliding motion of the interface 6, are therefore able to straighten out along the guide 5 (see Figures 8, 9).

This clearly explains the actual reason and purpose of said arc-shaped configuration of said increased-length portions of the lead wires 3, since it can be most readily appreciated that it would otherwise prove practically impossible for said first interface to slide along said face 5 in view of moving closer to said second interface and get connected therewith.

As far as said second interface 7 is concerned, the same is usually provided and arranged in a fixed position relative to the structure of the motor. In particular, it is mounted onto a printed-circuit board (not shown) that is connected to the remaining part of the electric circuit. It therefore quite clearly appears that it is just the first interface 6 that has to be made capable of sliding along the guide to reach the position of the second interface 7, and not the other way round. Still more clearly appears ultimately the need for said arc-shaped increased-length wire portions 3A to be provided.

The advantage of the present invention can be readily and fully appreciated from the explanations given above: in fact, as compared with the prior art, the need is in this case done away with for an additional connection to be provided between the lead wires of the stator windings and the terminal lead wires branching off the same stator windings for connection to a specially provided connector that is then in turn connected to the external power-supply circuit.

In this case, the same lead wires forming the stator are in fact directly connected to a single and sole connector formed of the afore-mentioned interfaces 6 and 7, so that it is just such single and sole connector that directly connects said stator lead wires with the power-supply circuit provided externally on the motor frame.

The possibility is further given for a procedure to be easily implemented for mounting the motor and having it connected to the related terminal board, wherein such procedure may be based on the use of an actuator that is adapted to automatically displace said first interface 6 within the guide 5 until it is brought into full coupling with said second interface 7. As it can be readily appreciated, this would practically allow for a further advantageous mode of manufacturing.

Preferably, in view of allowing for an easy and swift displacement of said first interface 6, the latter is provided with a suitable protuberance or gripping pin 6A (see Figures 6, 8) that is accessible from outside in the guide 5 all along the sliding path of said first interface therewithin, so as to allow said first interface 6 to be displaced to as full as possible an extent along said guide 5, until it is able to effectively couple up with said second interface 7.

Advantageously, said two interfaces 6 and 7 may be provided with respective lock-on means, preferably of the snap-fitting type, as indicated at 10 and 11, respectively, in Figures 1 and 8, which are effective in ensuring firmness and reliability of the related connections after coupling. In a still advantageous manner, said lock-on means 10 and 11 should also be able to be selectively released, so as to enable the motor to be separated from the external power-supply circuit should any occurrence or any need arise to require this.

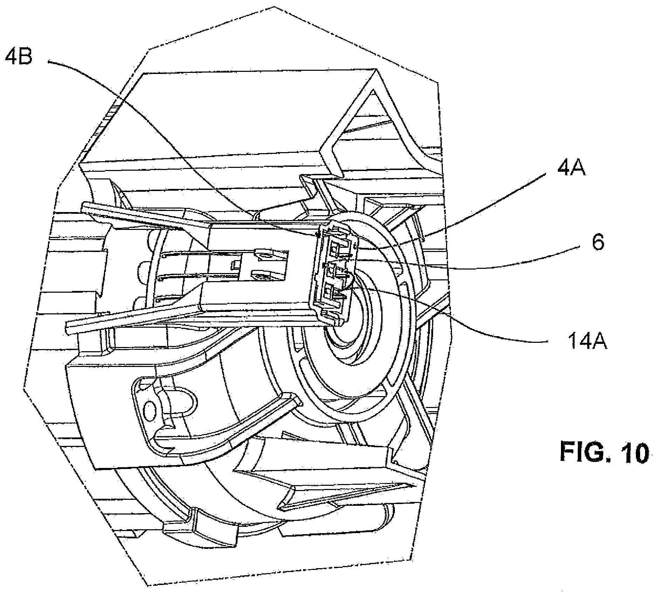

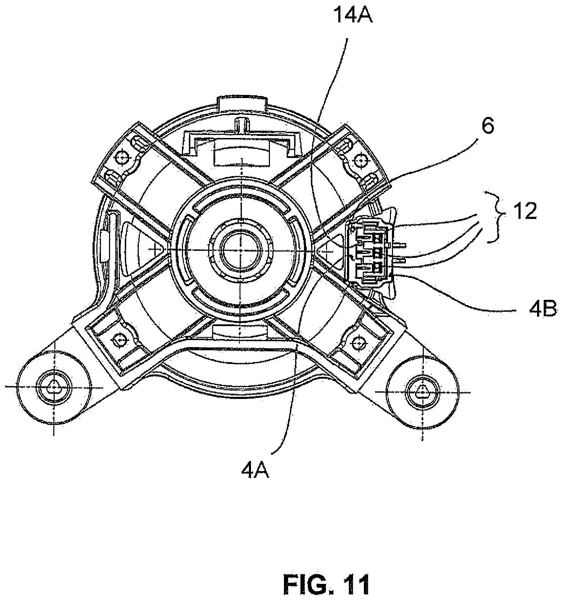

A further improvement consists in providing said appendix 4 so that at least a portion 4A thereof is formed integrally with a portion of the outer frame 1, so as this is exemplarily illustrated in Figures 8 to 11.

Such improvement is in turn instrumental in allowing for a further one, in that said guide 5 may be provided by a linear space delimited
- on said integrally formed portion 4A, by a linear groove 14A formed in a surface facing outwards from said integrally formed portion 4A (see Figures 9 to 11),
- and a corresponding additional portion 4B that is produced separately to be subsequently mounted onto said portion 4A (see Figures 8 to 11).

In this connection, it should be appreciated that the related manufacturing sequence shall obviously be set up so that, after said portion 4A having been so formed integrally, in the respective linear grooves 14A is provisionally fitted said first interface 6 and, immediately thereupon, said additional portion 4B is applied so as to enclose the space delimited in the above-mentioned manner and - as a result - form said guide 5, wherein said first interface 6 would therefore be already fitted in such guide in a stable manner.

Another advantageous improvement of the present invention consists in having said lead wires 3 connected to said first interface 6 by means of a connection technique that is largely known as such in the art under the name of "MAG-MATE", which consists in directly using said lead wires 3 coming out of the stator winding, with a layer of coating varnish as the sole insulation thereof according to the generally known technique, and inserting them in a "scissor-like manner" in corresponding slotted metal receptacles 12 appropriately provided within the body of said first interface 6, wherein said "scissor-like" or dovetail-slotted receptacles are adapted to cut, i.e. splice said lead wires 3 as they are being inserted therein, so as to automatically provide a galvanic connection between said lead wires and said respective metal receptacles thereof, as this is best shown in Figures 6, 8 and 11.

## Claims

1. Electric motor comprising:
- an outer frame (1),
- a stator winding (2) lodged inside said outer frame,
- connecting means able of electrically connecting the electric wires (3) which form the ends of said stator winding to an electric circuit externally linked to said motor, said connecting means comprising:
- a connector made up with a first and second interface (6,7) on the first interface (6) terminate said electric wires (3) of said stator winding (2),
- and on the second interface (7) terminate the wires of said external electric circuit,
- a guide (5) associated and firmly engaged to said outer frame (1),
- said first interface (6) being slidable with respect to said guide, said first interface (6) being able to take two different and opposite first and second end-positions (5A, 5B) sliding along said guide, **characterized in that** said second interface (7) is placed in a fixed position with respect to said guide (5), and that said first interface (6) is able to slide into said guide (5), so as to take said first end-position (5B) in which it is able to be coupled to said second interface (7), the portions of said wires (3), between said stator winding (2) and said first interface (6), show respective lengths (3A) which are adequately greater than the plain geometrical distance separating said first end position (5A) from said second end position (5B) so as to allow the sliding of said first interface (6) along said guide (5) between said first end position (5A) and said second end position (5B).

2. Electric motor according to claim 1, **characterized in that** said first interface (6) is provided with a protuberance (6A) which can be reached from outside for the whole sliding-run of said first interface.

3. Electric motor according to claim 1, **characterized in that** said two interfaces (6, 7) are provided with respective coupling means (10, 11) able to engage said two interfaces to each other, when electrically connected.

4. Electric motor according to claim 3, **characterized in that** said coupling means (10, 11) are apt to selectively disengage so as to separate said electric motor from said external electric circuit.

5. Electric motor according to any of the preceding claims, **characterized in that** said guide (5) is formed inside an appendix (4) engaged to said frame, said appendix comprising at least a first portion (4A) formed integrally with a portion of said outer frame (1), and a second separate portion (4B) able to be mounted onto said first portion (4A), so as to form said guide (5).

6. Electric motor according to any of previous claims, **characterized in that** said first interface (6) is provided with a gripping means or protuberance (6A) extending from said first interface (6) and accessible from the outside so as to allow said first interface (6) to be displaced to an extend as full as possible along said guide (5).

7. Electric motor according to claim 1, **characterized in that** said first interface (6) is provided with a plurality of metal lodgings shaped as a scissors able of creating an outer cut on the respective electric wires introduced into them, and that the ends of said electric wires (3) are engaged into respective said lodgings of said first interface.

## Patentansprüche

1. Elektromotor, mit:
- einem Außenrahmen (1),
- einer Statorwicklung (2), die im Inneren des Außenrahmens angeordnet ist,
- einer Verbindungseinrichtung, die zum elektrischen Verbinden der elektrischen Leitungen (3), die die Enden der Statorwicklung bilden, mit einem elektrischen Stromkreis geeignet ist, der extern mit dem Motor verbunden ist, wobei die Verbindungseinrichtung aufweist:
- einen Verbinder, der aus einem ersten Zwischenstück und einem zweiten Zwischenstück (6, 7) aufgebaut ist, wobei die elektrischen Leitungen (3) der Statorwicklung (2) an dem ersten Zwischenstück (6) enden,
- und die Leitungen des externen elektrischen Stromkreises an dem zweiten Zwischenstück (7) enden,
- eine Führung (5), die mit dem Außenrahmen (1) verbunden und fest mit diesem im Eingriff ist;
wobei das erste Zwischenstück (6) in Bezug auf die Führung verschiebbar ist, wobei das erste Zwischenstück (6) in der Lage ist, beim Gleiten entlang der Führung zwei verschiedene und gegenüberliegende Stellungen als ein erste und eine zweite Endstellung (5A, 5B) einzunehmen, **dadurch gekennzeichnet, dass**
das zweite Zwischenstück (7) an einer festen Position in Bezug auf die Führung (5) angeordnet ist, und das erste Zwischenstück (6) in die Führung (5) derart verschiebbar ist, dass die erste Endstellung (5B) eingenommen wird, in der es in der Lage ist, mit dem zweiten Zwischenstück (7) verbunden zu werden, wobei die Bereiche der Leitungen (3) zwischen der Statorwicklung (2) und dem ersten Zwischenstück (6) entsprechende Längen (3A) haben, die ausreichend größer sind als der reine geometrische Abstand, der die erste Endstellung (5A) von der zweiten Endstellung (5B) trennt, so dass das Verschieben des ersten Zwischenstücks (6) entlang der Führung (5) zwischen der ersten Endstellung (5A) und der zweiten Endstellung (5B) möglich ist.

2. Elektromotor nach Anspruch 1, **dadurch gekennzeichnet, dass** das erste Zwischenstück (6) mit einem Vorsprung (6A) versehen ist, der während der gesamten Verschiebung des ersten Zwischenstücks von außen zugänglich ist.

3. Elektromotor nach Anspruch 1, **dadurch gekennzeichnet, dass** zwei Zwischenstücke (6, 7) mit entsprechenden Kopplungsmitteln (10, 11) versehen sind, die in der Lage sind, die zwei Zwischenstücke miteinander zu verbinden, wenn eine elektrische Verbindung hergestellt wird.

4. Elektromotor nach Anspruch 3, **dadurch gekennzeichnet, dass** die Kopplungsmittel (10, 11) geeignet sind, selektiv entkoppelt zu werden, um den Elektromotor von dem externen elektrischen Stromkreis zu trennen.

5. Elektromotor nach einem der vorhergehenden Ansprüche, **dadurch gekennzeichnet, dass** die Führung (5) im Inneren eines Fortsatzes (4) ausgebildet ist, der mit dem Rahmen im Eingriff ist, wobei der Fortsatz mindestens einen ersten Bereich (4A), der als Einheit mit einem Bereich des Außenrahmens (1) ausgebildet ist, und einen zweiten getrennten Bereich (4B) aufweist, der in der Lage ist, auf dem ersten Bereich (4A) so befestigt zu werden, dass die Führung (5) gebildet wird.

6. Elektromotor nach einem der vorhergehenden Ansprüche, **dadurch gekennzeichnet, dass** das erste Zwischenstück (6) mit einer Greifeinrichtung oder einem Vorsprung (6A) versehen ist, die bzw. der sich von dem ersten Zwischenstück (6) aus erstreckt und von außen zugänglich ist, so dass ein Verschieben des ersten Zwischenstücks (6) in einem möglichst großen Maße entlang der Führung (5) möglich ist.

7. Elektromotor nach Anspruch 1, **dadurch gekennzeichnet, dass** das erste Zwischenstück (6) mit mehreren Metallaufnahmen versehen ist, die als Schere geformt sind, die in der Lage ist, einen Außenschnitt an den entsprechenden elektrischen Leitungen, die eingeführt sind, vorzugnehmen, und wobei die Enden der elektrischen Leitungen (3) in die jeweiligen Aufnahmen des ersten Zwischenstücks eingreifend eingeführt sind.

## Revendications

1. Moteur électrique comprenant:
- un cadre externe (1),
- un enroulement de stator (2) logé à l'intérieur dudit cadre externe,
- des moyens de connexion capables de connecter électriquement les fils électriques (3) qui forment les extrémités dudit enroulement de stator à un circuit électrique reliés de manière externe audit moteur, lesdits moyens de connexion comprenant :
- un connecteur constitué d'une première et d'une seconde interface (6, 7) sur la première interface (6) terminant lesdits fils électriques (3) dudit enroulement de stator (2),
- et sur la seconde interface (7) terminant les fils dudit circuit électrique externe,
- un guide (5) associé et fermement engagé avec ledit cadre externe (1),
- ladite première interface (6) étant coulissante par rapport audit guide,
- ladite première interface (6) étant capable de prendre deux première et seconde positions finales (5A, 5B) différentes et opposées, coulissant le long dudit guide, **caractérisé en ce que** ladite seconde interface (7) est placée dans une position fixe par rapport audit guide (5), et **en ce que** ladite première interface (6) est capable de coulisser dans ledit guide (5), de manière à prendre sa première position finale (5B) dans laquelle elle peut être couplée à ladite seconde interface (7), les portions desdits fils (3), entre ledit enroulement de stator (2) et ladite première interface (6), montrent des longueurs respectives (3A) qui sont plus longues de façon adéquate que la distance géométrique séparant la première position finale (5A) de la seconde position finale (5B) de sorte de permettre le coulissement de ladite première interface (6) le long dudit guide (5) entre la première position finale (5A) de la seconde position finale (5B).

2. Moteur électrique selon la revendication 1, **caractérisé en ce que** ladite première interface (6) est munie d'une protubérance (6A) pouvant être atteinte de l'extérieur pour toute la course du coulissement de ladite première interface.

3. Moteur électrique selon la revendication 1, **caractérisé en ce que** lesdites deux interfaces (6, 7) sont pourvues de moyens de couplage (10, 11) respectifs capables d'engager lesdites deux interfaces l'une avec l'autre, lorsqu'elles sont connectées électriquement.

4. Moteur électrique selon la revendication 3, **caractérisé en ce que** lesdits moyens de couplage (10, 11) sont aptes à sélectivement être désengagés de sorte à séparer ledit moteur électrique dudit circuit électrique externe.

5. Moteur électrique selon l'une quelconque des revendications précédentes, **caractérisé en ce que** ledit guide (5) est formé à l'intérieur d'un appendice (4) en prise avec ledit cadre, ledit appendice comprenant au moins une première partie (4A) formée intégralement avec une portion dudit cadre externe (1), et une seconde portion (4B) séparée pouvant être montée sur ladite première portion (4A), de manière à former ledit guide (5).

6. Moteur électrique selon l'une quelconque des revendications précédentes, **caractérisé en ce que** ladite première interface (6) est munie d'un moyen de saisie ou d'une protubérance (6A) s'étendant depuis ladite première interface (6) et accessible de l'extérieur de manière à permettre à ladite première interface (6) d'être déplacée dans une étendue aussi complète que possible le long dudit guide (5).

7. Moteur électrique selon la revendication 1, **caractérisé en ce que** ladite première interface (6) est munie d'une pluralité de logements en métal en forme de ciseaux capables de créer une coupure extérieure sur les fils électriques respectifs introduits dans ceux-ci, et que les extrémités desdits fils électriques (3) sont engagées dans lesdits logements respectifs de ladite première interface.
